# EUROPEAN PATENT SPECIFICATION

(11) **EP 3 028 779 B1**
(45) Date of publication and mention of the grant of the patent: **15.06.2022**
(21) Application number: 15000855.5
(22) Date of filing: 23.03.2015
(51) Int. Cl.: B08B 9/08, B65D 88/66

(54) **DEVICE COMPRISING AUTONOMOUS SYSTEM PROVIDING ANALYSIS AND FLOW OF BULK MATERIAL**
VORRICHTUNG MIT EINEM AUTONOMEN SYSTEM ZUR BEREITSTELLUNG EINER ANALYSE VON SCHÜTTGUT
DISPOSITIF AVEC SYSTÈME AUTONOME APTE À DONNER UNE ANALYSE DE MATÉRIAUX EN VRAC

(30) Priority: 01.12.2014 CZ 20140838
(43) Date of publication of application: 08.06.2016
(73) Proprietor: Vysoká Skola Bánská - Technická Univerzita Ostrava, 708 00 Ostrava-Poruba (CZ)
(72) Inventor: Brázda, Robert, CZ-70800 Ostrava (CZ); Slíva, Ales, CZ-73935 Václavovice (CZ); Günther, Petr, CZ-74719 Bohuslavice (CZ); Procházka, Ales, CZ-70030 Ostrava (CZ); Bora, Tomás, CZ-71600 Ostrava (CZ); Zahradník, Ales, CZ-73961 Trinec (CZ); Zilka, Frantisek, CZ-79847 Horní Stepánov (CZ)
(74) Representative: Kendereski, Dusan

(56) References cited:
- CZ-U1- 24 492
- GB-A- 891 135
- JP-A- 2004 347 490
- US-A- 4 423 832
- US-A- 4 764 221
- US-A- 5 772 128
- US-A1- 2004 134 518
- US-A1- 2005 219 951
- US-A1- 2006 257 234

## Description

### Field of the Invention

The invention relates to a device providing analysis of bulk material and elimination of bulk material flow defects, comprising an autonomous system which is arranged in a bulk material silo.

### State of the Art

In present, flow defects in bulk material silos are being solved in those cases when the parameters of the bulk material are constant, and solutions of these flow defects are limited by the localization of the flow defect. Moreover, flow defect often occurs in various places, therefore it is necessary to install, for example aeration or vibration system, in more places in the bulk material silo.

One of the solutions which serves for detection of bulk material flow defects is a capsule-type sensor of physical and optical properties of bulk material, described in the Czech patent application CZ 20120036 A3, which consists of a base body, with at least one transparent face arranged in the external portion thereof, and with the combination unit of a source and a record storage, optical properties sensor and physical properties detector arranged in the inner portion thereof, wherein at least one transparent face is provided from inside with a physical quantity detector. Measurement of the bulk material physical and optical properties is conducted by a capsule-type sensor in such a manner that the capsule-type sensor is set into the initial position on the bulk material level so that the y axis of the capsule-type sensor coincides with the y axis of the bulk material silo, then the discharge hole opens and the immersion of the capsule-type sensor into the bulk material takes place. During passage of the capsule-type sensor through the bulk material, optical properties are sensed by means of the optical quantity sensors and physical properties are sensed by means of the physical quantity detectors, the level of the bulk material in the silo is being refilled to the upper level thereof. It further allows other actions resulting from the function of the device, for example disruption and improvement of the bulk material flow in the silos.

US patent US 5772128 A discloses a device for providing analysis of bulk material and active search and elimination of bulk material flow defect in accordance with the preamble of claim 1. In particular it discloses an apparatus and a method providing analysis of bulk material and elimination of bulk material flow defects, the apparatus arranged in a bulk material silo comprising flow defects detectors placed on the walls of the bulk material silo. The apparatus operates only within or near the entrance or exit of a chute, whereby a potential jam in the chute is detected by an acoustic signal with an acoustic detector, the acoustic signal is then processed with a processor and the jam is finally removed with a jam breaking device. The jam breaking device is preferentially an air hammer providing vibration and/or high pressure air pulses; however, the device may be an electrically driven device that vibrates and/or emits pulses of compressed air, an electric device that rotates a weighted member to break up the jam or other types of similar devices. The downward movement of this device is achieved by its own weight and vibrations and the upward movement is achieved by being pulled up on a rope/cable. Moreover, the apparatus can comprise a housing generally defined by an upper and lower portion, which both have a plurality of radial coaxial passages or side ports which are circumferentially spaced around and extend through the housing. The side ports provide an exit for pressurized fluid flowing through the housing.

Technical solution described in the Czech utility model CZ 24492 U1 relates to a device for identification and sensing of bulk material properties. A capsule-type sensor is designed to measure quantities by sinking of the capsule-type sensor into bulk material, and to identify or sense the behaviour of bulk material ,in vitro" in various transport, manipulation and storage systems with bulk material being in motion. Capsule-type sensor of physical and optical properties of the bulk material consists of a basic capsule body with five transparent faces in its outer portion and a combination unit of a source and record storage with the optical and physical properties sensor embedded in an inner portion of the basic capsule body. A recording device evaluating the movement of bulk material is provided in the combination unit of the source and record storage of the capsule-type sensor. Combination unit of the source and record storage is arranged in such a position that the record storage would be able to make a record via transparent face. At least one transparent face is provided with detectors of physical properties, which sense, for example, pressure, temperature, friction of bulk material particles etc., with the capsule-type sensor moving through the bulk material. The present invention represents a completely new and different concept in comparison to the above described technical solution, because the present invention allows autonomous movement of the bulk material flow and other actions resulting from the device's function.

The Japanese patent application JP 2004347490 A discloses a device comprising a bulk analyser and combined sensors of temperature, humidity, acceleration and position, wherein these features are connected with a control circuit. The device in the bulk material silo is suspended on a cable. To eliminate a flow defect, vibrational movement by means of a rotating weighted member is used.

The US patent application US 2005219951 A1 discloses a system using probes to locate hidden animals in the ground, wherein said probes may comprise thermocouples for detecting temperature of an animal. The system is designed to be inserted in the ground to locate animal burrows. The system comprises a two way motorized propulsion system, such as by counter-rotating worm screws. The motorized system is powered and commanded through a cable connection with a command unit.

The US patent US 4426832 A relates to inflatable liner for mounting within a hopper type receptacle which receives and discharges flowable bulk particulate material. The device maintains a continuous flow of particulate material through a container by alternatively inflating and deflating individual chambers of an inflatable liner assembly. The inflatable liner assembly is mounted on the interior surface of a container wall.

The measurement of the subsurface material properties in the soil or its chemical composition is provided by the technical solution described in the US patent application US 2006107772 A1 in situ using a direct method. This method comprises a rotating annular tip which is able to drill and reach the subsurface materials, then to eject a probe through the drilled hole and to scan the chemical or material properties using detectors and sensors provided on the probe. Briefly described, the device allows drilling through the soil and consequently carrying out the partial analysis of the material properties. The main difference between the present invention and the above described US patent solution is using an autonomous system working independently of other systems, further, using this system mainly for bulk material in the silos, and other actions resulting from the device's function.

Another solution described in the European patent application EP 1962089 A1 provides a probe for measurement of physical, chemical and biological parameters, which consists of a central body made of a wrought aluminium tube via which water flows inside. In the internal part of the tube a measurement cell is fixed, where measurement sensors are arranged. Batteries and electronics are placed in the external part of the tube. Sensors for measurement of physical, chemical or biological parameters are directly connected to the said battery and controlled by the said electronics. In case of probe being used for the study of undersea environment, it is provided also with a fluorescence sensor for the immediate determination of the concentration of phytoplankton. The main difference between the present invention and the above described solution of the European patent application is that it is used for the bulk material and the fact that the present invention is also provided with its own propulsion.

The Chinese patent application CN 103216192 A describes an invention related to the spiral drilling robot with the environment detection function. The drilling robot comprises a drilling system for soil cutting and applying of drilling force, a control system for setting the drilling direction, a detection system for detection of the surrounding environment of the robot and of the control system for processing of detection, regulation and drilling direction setting information. The control system communicates with the detection system, drilling system and the system for controlling and setting of the drilling direction. The robot is able to drill spontaneously because it scans the surrounding environment in real time and this allows it to evaluate and adjust the movement direction during drilling. The drilling robot is connected with the ground operator and it is powered using composite cables, so the ground personnel can comfortably perform a remote real-time monitoring. The drilling robot is especially suitable for underground exploration and search and rescue in case of mining disasters etc., and not for the detection of bulk material flow.

The following US patent US 6315062 B1 discloses an underground drilling tool navigation system and method, wherein one or more gyroscope, accelerometer and magnetometer sensors are used. A regulator controls the drilling tool substantially in real time depending on the sensed parameters. The control signal is applied to the driving apparatus to control the direction of drilling tool. The tracker unit may further include a recalibration unit which cooperates with the navigation sensors. The main differences between the present invention and the above described system are mainly its usage as an autonomous system independent of other systems, usage mainly for bulk materials in silos, the analysis of mechanical-physical properties and other actions resulting from the present invention's function.

The US patent application US 2013172671 A1 discloses a device representing robotic capsule with a propulsion system, which allows independent movement, optical and recording device for alternative access and collecting of information from the patient's body. The device is used for endoscopic purposes and this is the main difference in contrast to the present invention. In comparison to the above described system that measures pH, the liquid flow rate, and pressure in patient's body, the present invention is used for bulk material flow, where an analysis of mechanical-physical properties as well as other actions resulting from the present invention's function are carried out.

The US patent US 7365509 B2 discloses a device represented by a capsule with micro-robot moving system for endoscopic examination of the patient. This device is a moving system which moves to the wall of the organ coated with "mucilage" with high speed. The device is constructed in such a way that the head is formed in a semi-spherical shape and the outer surface of the capsule is coated with an anti-adhesion coating agent for reducing friction against the wall of the organ during contact. The device comprises a driving part for moving the capsule, an inner cylinder, and outer cylinder, rotating arms and a camera. The driving part comprises a subminiature motor installed in the end part of the cover and a screw rod in association with a station shaft of the subminiature motor, which is driven by battery. In comparison to the above described system, the present invention is used mainly for bulk material flows, where an analysis of the mechanical-optical properties and other actions resulting from the device's function is carried out.

The aim of the present invention is to provide a device actively searching for flow defects, which are effectively eliminated by their own movement or by targeted aeration or targeted vibrations.

### Summary of the Invention

The object of the invention is achieved by a device according to claim 1. The device provides analysis of bulk material and elimination of bulk material flow defects, comprising an autonomous system arranged in the bulk material silo and detectors of flow defects provided on walls of the bulk material silo, and the autonomous system is constructed as an autonomous system without a cable connection to the silo.

The autonomous system comprises an autonomous system body designed in a cylindrical shape, on one end terminated with a cone and on the other end with a cap with a space inside, in which an aeration system with control elements is arranged together with a compressed air silo connected with pressure/underpressure generators, which are further connected to aeration system channels, and further a vibration system, a bulk material analyser, combined load sensors and combined sensors of temperature, humidity, acceleration and positions are arranged in the autonomous system body, wherein the vibration system, the bulk material analyser, the combined load sensors, the combined sensors of temperature, humidity, acceleration and position and a sensor of optical properties are connected with a control circuit comprising power supply and recording device, wherein the sensor of optical properties together with a synchronized light source are arranged inside the cap.

For placing of the autonomous system in the silos of smaller dimensions, the system is constructed without a cable and is freely placed or locked in its inner space.

The autonomous system independently evaluates flow defects and is able to actively eliminate them. The device can be preferably used for very large bulk material silos. Another advantage it provides is the complex analysis of the bulk material properties in any place in the bulk material silo, including collection of samples.

### Description of the Drawings

The device is schematically illustrated in the drawings, where the Fig. 1 shows the placement of the device in the cover on the inner wall of the bulk material silo, Fig. 2 shows variants of the device with energy cable and device without a cable, Fig. 3 shows a longitudinal section of the device, showing the possible arrangement of the particular components, Fig. 4a shows a device with the drive using motion screws, Fig. 4b shows a cross section of the device with motion screws, Fig. 4c shows a coordinate system for determination of device's direction of movement, Fig. 5a shows one embodiment of the device with motion secured by air flow, and Fig. 5b shows a device with pneumatic motion nozzles in A-A section.

### Description of the Preferred Embodiments

The invention relates to the device providing analysis of bulk material and elimination of the bulk material flow defects and comprises an autonomous system which is arranged in the bulk material silo and provides analysis and collection of samples of bulk material directly inside the silo - particle size analysis, the shape of particles, pressures in the bulk material, humidity, temperature, friction parameters, optical parameters, cohesion and others.

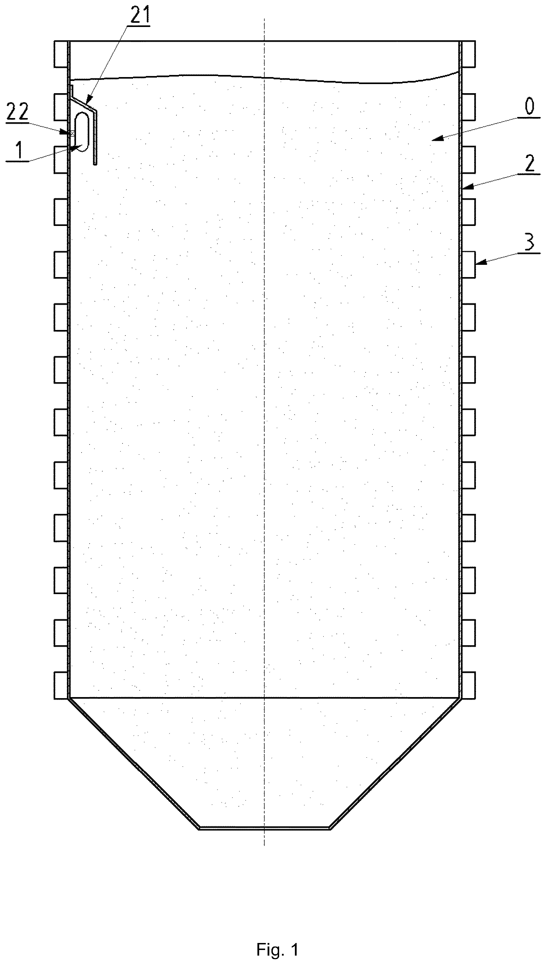

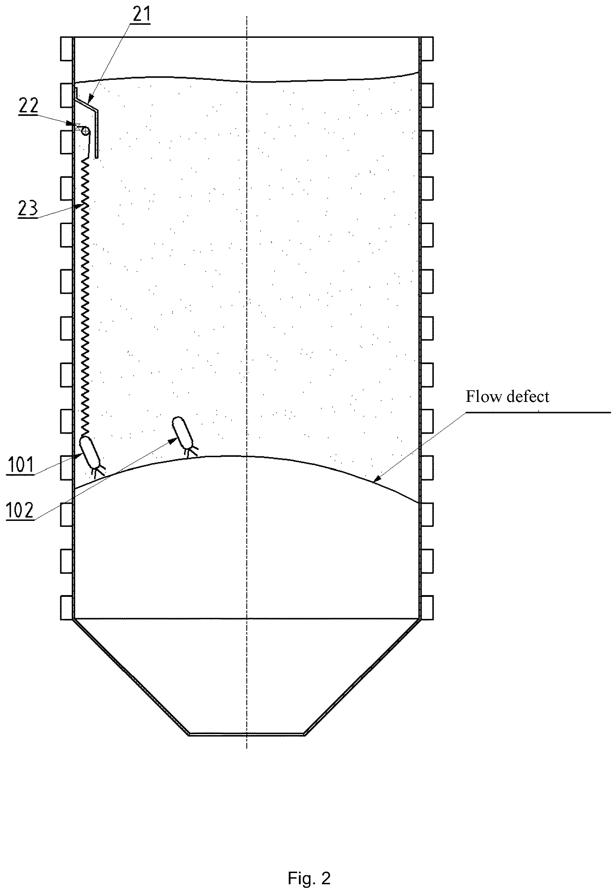

As it is apparent from the Fig. 1 or Fig. 2, the autonomous system 1 might be placed under the cover 21 on the wall of the silo 2, wherein the system is connectable with the wall of the silo by means of locking device 22. The system might be constructed as an autonomous system 101 with a cable 23 according to prior art or as an autonomous system 102 without a cable 23 according to the present invention.

The embodiment of the autonomous system 102 without the cable 23 is designed for bulk material silos 2 of small volumes, small heights and for storing bulk material with low density.

The device comprising an autonomous system 1 providing analysis and flow of bulk material 0 is arranged in a bulk material silo 2 which is provided with flow defects detectors 3 and a localisation system. In the basic embodiment is the autonomous system 1 provided with an optical properties sensor 9 with a synchronised source of light 10, a vibration system 11, a bulk material analyser 12, combined load sensors 13 and combined sensors 14 of temperature, humidity, acceleration and position. It further comprises an aeration system 15 provided with control elements 153, a compressed air tank 152, a pressure/underpressure generator 16, a control circuit 17 which is connected with a power supply 171, and a recording device 172. The autonomous system 1 in its initial position is locked by a locking device 22, for example using an electromagnet or via a mechanic system or the device creating underpressure. The function of the cover 21 of the autonomous system is to create a space for device's default position and to protect the device during inactivity and before wearing by moving bulk material 0. The cover 21 is placed in the highest possible position of the storage system in order to use the movement of the autonomous system 1 under its own weight.

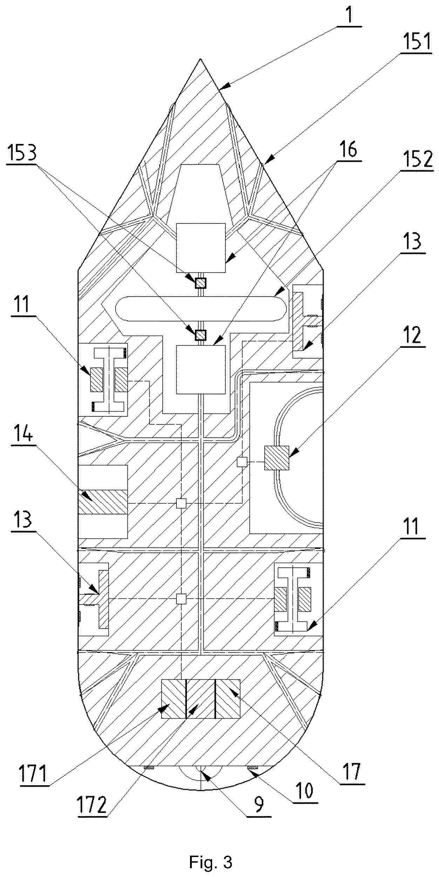

One of the possible options of the autonomous system 1 is shown in the Fig. 3. The autonomous system 1 in this embodiment comprises a cylinder shaped body which is on one end terminated with a cone and on the other end with a cap. This body has a space inside, in which the aeration system 15 with control elements 153 and compressed air silo 152 is arranged, connected to the pressure/underpressure generators 16, which are further connected to the channels 151 of the aeration system 15. In the body of the autonomous system 1 are further arranged the vibration system 11, the bulk material analyser 12, the combined load pressure + shear load sensors 13 and the combined sensors 14 of temperature, humidity, acceleration and position. The vibration system 11, bulk material analyser 12 as well as combined load sensors 13 and combined sensors 14 of temperature, humidity, acceleration and position, together with the optical properties sensor 9 are connected with the control circuit 17 comprising power supply 171 and recording device 172, wherein the optical properties sensor 9 with synchronised light source 10 is arranged inside the cap of the body. Preferably, LED diodes are preferably used as the source of light.

The function of the device in flow defects localisation is as follows. The autonomous system 1 is arranged in the bulk material silo 2 and the flow defect is localized either by the flow defects detector 3 or by the vibration system 11 which is able to generate and receive sound waves reflected from inhomogeneities or flow defects or the combination thereof. The flow defects detector 3 might operate on the principle of wall pressures or by transmitting and receiving sound waves, or on the principle of X-ray radiation or using tomographic method.

The subsequent elimination of flow defects in the bulk material silo 2 is provided by the movement of the device itself towards the flow defect, or after the localisation of the flow defect using flow defects detector 3 it will be eliminated using the impact of compressed air via aeration system 15 or with vibrations of the device using the vibration system 11. The vibration system 11 comprises a rotating shaft at the end of which the counterbalances are located. The rotation of unbalanced shaft creates vibrations which are transferred by the autonomous system 1 structure to the bulk material, and thus disrupt the flow defects.

The aeration system 15 fulfils two functions. The primary function is to disrupt the flow defects using precisely-aimed pulses of compressed air by aeration channels 151. The secondary function is to allow movement of the autonomous system 1 by ruffling the bulk material by aeration, which will lower the friction between the autonomous system 1 and bulk material 0. The secondary function might be useful for all movement methods, using a worm drive 4 as well as using a current system and system of bellows/cylinder system.

Bulk material analyser 12 is used for collecting and analysing of bulk material 0 inside the bulk material silo 2. Bulk material 0 is sucked into the analyser using underpressure, where the required analyses are carried out, and then again using the compressed air it is transported back to the bulk material silo 2. The analysis of bulk material 0 might be carried out continually or it is possible to keep a sample of bulk material 0 in the analyser 12 for later analyses outside the bulk material analyser 12.

The movement of the autonomous system 1 in the bulk material silo 2 is possible by several different methods.

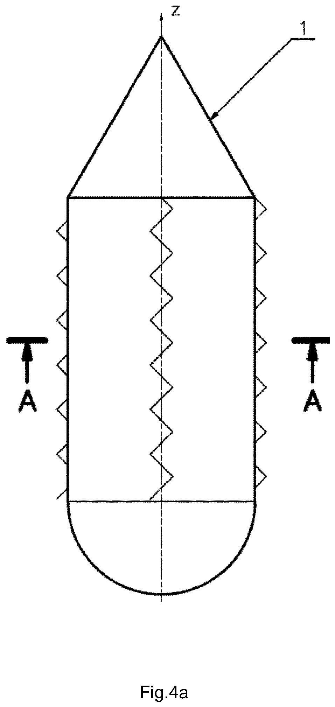

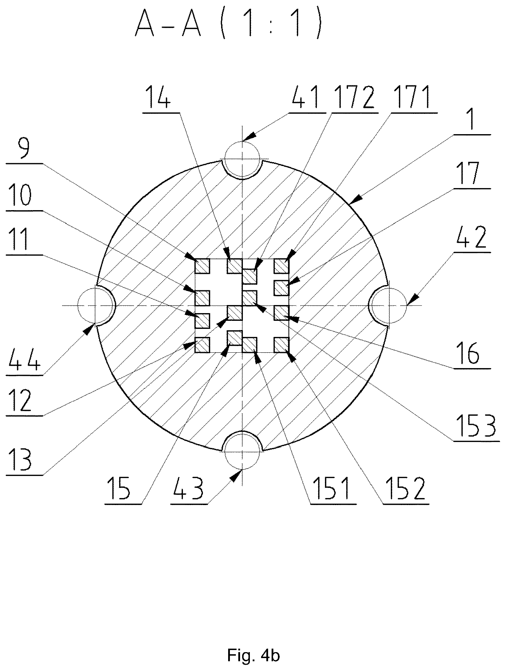

As it is apparent from the Fig. 4a, the movement of the device 1 in the bulk material silo 2 is allowed using the worm screw drive 4, which comprises at least four worm screws, by the way of example, the first and second worm screw 41 and 42 and the third and fourth worm screw 43 and 44, which are preferably positioned in 90° angle against each other, as it is apparent from the Fig. 4b, wherein each worm screw might have different speed independently from the other worm screws, and it might independently perform a plus or minus worm screw rotation or it might have no rotation. As it is apparent from the Fig. 4b, in this embodiment the autonomous system 1 comprises the same components which are described above in the Fig. 3.

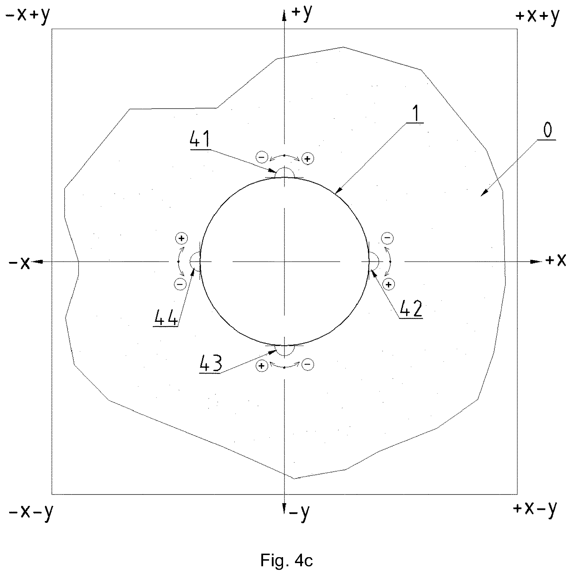

The basic directions of the autonomous system 1 movement are schematically illustrated in the Fig. 4c and the particular movements of the autonomous system 1 might be described as follows:
- The movement of the autonomous system 1 towards the +y axis will take place when the worm screw 41 has minus rotation, the worm screw 43 has plus rotation and the worm screws 44 and 42 have no rotation.
- The movement of the autonomous system 1 towards the +x+y axis will take place when the worm screws 41 and 42 have minus rotation and the worm screws 44 and 43 have plus rotation.
- The movement of the autonomous system 1 towards the +x axis will take place when the worm screw 42 has minus rotation, the worm screw 44 has plus rotation and the worm screws 41 and 43 have no rotation.
- The movement of the autonomous system 1 towards the +x-y axis will take place when the second and the third worm screw 42 and 43 have minus rotation and the first and the fourth worm screw 41 and 44 have plus rotation.
- The movement of the autonomous system 1 towards the -y axis will take place when the third worm screw 43 has minus rotation, the first worm screw 41 has plus rotation and the fourth and the second worm screw have no rotation.
- The movement of the autonomous system 1 towards the -x-y axis will take place when the third and fourth worm screw 43 and 44 have minus rotation and the first and second worm screw 41 and 42 have plus rotation.
- The movement of the autonomous system 1 towards the -x axis will take place when the fourth worm screw 44 has minus rotation, the second worm screw 42 has plus rotation and the first and the third worm screw 41 and 43 have no rotation.
- The movement of the autonomous system 1 towards the -x+y axis will take place when the first and the fourth worm screw 41 and 44 have minus rotation and the second and the third worm screw 42 and 43 have plus rotation.

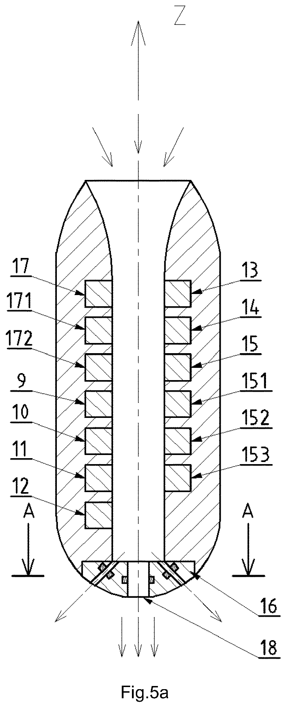

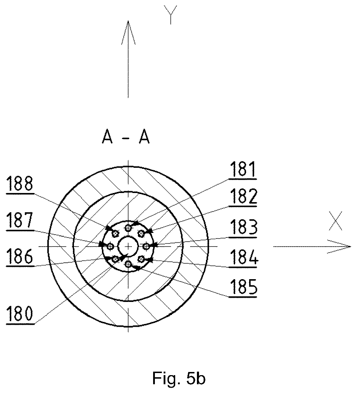

Another option comprising the autonomous system 1, which is also provided with the optical properties sensor 9 with synchronized light source 10 in the form of LEDs, the vibration system 11, bulk material analyser 12, combined load sensor 13, combined sensor 14 of temperature, humidity, acceleration and position; and which further comprises the compressed air silo 152, control circuit 17 which is connected with the power supply 171 and the recording storage 172. In this case, the movement the device in bulk material is provided using current system, as it is shown in the Fig. 5a. The current system comprises the pressure/underpressure generator 16 and the opening 18 for the movement forwards, wherein the movement of the device in various directions is provided using compressed air, which flows through the system, for example through the eight direction openings 181, 182, 183, 184, 185, 186, 187 and 188, which are arranged around the opening 18, as it is apparent from the Fig. 5b.

This option is suitable for the autonomous system 101 with the cable 23, or for the bulk material silo 2 filled with bulk material 0 with sufficient voidage between particles of bulk material 0. The current system sucks air using the pressure/underpressure generator 16, or air is removed from the compressed air silo 152, which is connected through the pressure pipe arranged in the cable 23. Then, it is transported outside the autonomous system 1 with direction openings 181 - 188 for movement control. The current system is provided with the main movement opening 18 and direction openings 181 - 188. As it is shown in the Fig. 5b, it is possible to determine the basic movement directions of the autonomous system 1 as follows:
- The movement of the autonomous system 1 towards the +y axis is implemented when the compressed air is transported through the main movement opening 18 and direction openings 183, 184, 185, 186 and 187 outside the autonomous system 1, while the direction openings 188, 181 and 182 are closed and do not transport any compressed air.
- The movement of the autonomous system 1 towards the +x+y axis is implemented when the compressed air is transported through the main movement opening 18 and direction openings 184, 185, 186, 187 and 188 outside the autonomous system 1, while the direction openings 181, 182 and 183 are closed and do not transport any compressed air.
- The movement of the autonomous system 1 towards the +x axis is implemented when the compressed air is transported through the main movement opening 18 and direction openings 185, 186, 187, 188 and 181 outside the autonomous system 1, while the direction openings 182, 183 and 184 are closed and do not transport any compressed air.
- The movement of the autonomous system 1 towards the +x-y axis is implemented when the compressed air is transported through the main movement opening 18 and direction openings 186, 187, 188, 181 and 182 outside the autonomous system 1, while the direction openings 183, 184 and 185 are closed and do not transport any compressed air.
- The movement of the autonomous system 1 towards the -y axis is implemented when the compressed air is transported through the main movement opening 18 and direction openings 187, 188, 181, 182 and 183 outside the autonomous system 1, while the direction openings 184, 185 and 186 are closed and do not transport any compressed air.
- The movement of the autonomous system 1 towards the -x-y axis is implemented when the compressed air is transported through the main movement opening 18 and direction openings 188, 181, 182, 183 and 184 outside the autonomous system 1, while the direction openings 185, 186 and 187 are closed and do not transport any compressed air.
- The movement of the autonomous system 1 towards the -x axis is implemented when the compressed air is transported through the main movement opening 18 and direction openings 181, 182, 183, 184 and 185 outside the autonomous system 1, while the direction openings 186, 187 and 188 are closed and do not transport any compressed air.
- The movement of the autonomous system 1 towards the -x+y axis is implemented when the compressed air is transported through the main movement opening 18 and direction openings 182, 183, 184, 185 and 186 outside the autonomous system 1, while the direction openings 187, 188 and 181 are closed and do not transport any compressed air.

### Industrial Applicability

The device is industrially applicable in all bulk material silos with prone to flow defects or in the silos in which the change of mechanical - physical properties of the bulk material occurs. The device is able to actively search for the flow defect and eliminate them. Another action of the device is a wide analysis of bulk material and collection of samples for future analysis not only in the bulk material silos but also in the bulk material landfills.

### List of Reference Signs

- 0: bulk material
- 1: autonomous system
- 101: autonomous system with a cable
- 102: autonomous system without a cable
- 2: bulk material silo
- 21: cover of the autonomous system
- 22: locking device of the autonomous system
- 23: cable
- 3: flow defects and localization of the autonomous system detectors
- 4: worm screw drive
- 41: first motion worm screw
- 42: second motion worm screw
- 43: third motion worm screw
- 44: fourth motion worm screw
- 9: optical properties sensor
- 10: synchronized light source
- 11: vibration system
- 12: bulk material analyser
- 13: combined load sensor
- 14: sensors of temperature, humidity, acceleration and position
- 15: aeration system
- 151: channels
- 152: compressed air silo
- 153: aeration system control elements
- 16: pressure/underpressure generator
- 17: control circuit of the device
- 171: power supply of the device
- 172: recording device
- 18: main motion opening
- 181 - 188: direction openings

## Claims

1. A device for providing analysis of bulk material and active search and elimination of bulk material flow defects, wherein the device comprises an autonomous system (**1**), which is configured to be freely placed or locked inside a bulk material silo (**2**), and flow defects detectors (**3**) configured to be placed on walls of the bulk material silo (**2**), wherein the autonomous system (**1**) has a shape of a cylinder on one end terminated with a cone and on the other end with a cap with a space inside, in which an aeration system (**15**) with control elements (**153**) and a compressed air silo (**152**) connected with pressure/underpressure generators (**16**) are arranged, which are further connected to channels (**151**) of the aeration system (**15**), and further a vibration system (**11**) and combined load sensors (**13**) are arranged in the autonomous system (**1**), wherein the vibration system (**11**) and the combined load sensors (**13**) are connected with a control circuit (**17**) comprising a power supply (**171**) and a recording device (**172**), **characterised in that** the autonomous system (**1**) is constructed without a cable connection to the bulk material silo (**2**), **in that** a bulk material analyser (**12**), combined sensors (**14**) of temperature, humidity, acceleration and position and an optical properties sensor (**9**) are arranged in the autonomous system (**1**), wherein the bulk material analyser (**12**), the combined sensors (**14**) of temperature, humidity, acceleration and position and the optical properties sensor (**9**) are connected with the control circuit (**17**), wherein the optical properties sensor (**9**) with a synchronized light source (**10**) is arranged inside the cap of the body of the autonomous system (**1**), and **in that** the body of the autonomous system (**1**) is provided with either at least two motion worm screws (**4**) on its surface, or alternatively with a main opening (**18**) surrounded by a system of direction openings (**181-188**) which are further connected to the pressure/underpressure generator (**16**) such that each direction opening (**181-188**) is reversibly closable to control its movement.

## Patentansprüche

1. Eine Vorrichtung zur Bereitstellung einer Analyse von Schüttgut und aktiver Suche und Beseitigung von Schüttgutflussdefekten, wobei die Vorrichtung ein autonomes System (1), das dazu eingerichtet ist, innerhalb eines Schüttgutsilos (2) frei platziert oder verriegelt zu werden, und Durchflussdefekten-Detektoren (3) umfasst, die dazu eingerichtet sind, um an Wänden des Schüttgutsilos (2) platziert zu werden, wobei das autonome System (1) eine Form eines Zylinders aufweist, das an einem Ende mit einem Konus abgeschlossen ist und am anderen Ende eine Kappe mit einem Raum aufweist, in dem ein Belüftungssystem (15) mit Steuerelementen (153) und ein mit Druck-/Unterdruckerzeugern (16) verbundenes Druckluftsilo (152) angeordnet sind, welche Druck-/Unterdruckerzeugern (16) ferner mit Kanälen (151) des Belüftungssystems (15) verbunden sind, und ferner ein Schwingungssystem (11) und kombinierte Lastsensoren (13) in dem autonomen System (1) angeordnet sind, wobei das Vibrationssystem (11) und die kombinierten Lastsensoren (13) mit einer Steuerschaltung (17) verbunden sind, die eine Stromversorgung (171) und eine Aufzeichnungsvorrichtung (172) umfasst, **dadurch gekennzeichnet, dass** das autonome System (1) ohne Kabelverbindung mit dem Schüttgutsilo (2) aufgebaut ist, **dass** ein Schüttgutanalysator (12), kombinierte Temperatur-, Feuchtigkeit-, Beschleunigung- und Position-Sensoren (14) und ein optischer Eigenschaftssensor (9) in dem autonomen System (1) angeordnet sind, wobei der Schüttgutanalysator (12), die kombinierten Temperatur-, Feuchtigkeit-, Beschleunigung- und Position-Sensoren (14) und der optische Eigenschaftssensor (9) mit der Steuerschaltung (17) verbunden sind, wobei der optische Eigenschaftssensor (9) mit einer synchronisierten Lichtquelle (10) innerhalb der Kappe des Körpers des autonomen Systems (1) angeordnet ist, und **dass** der Körper des autonomen Systems (1) entweder mit mindestens zwei Bewegungsschneckenschrauben (4) an seiner Oberfläche versehen ist, oder alternativ mit einer Hauptöffnung (18), die von einem System von Richtungsöffnungen (181-188) umgeben ist, die weiter mit dem Druck- /Unterdruckerzeuger (16) verbunden sind, so dass jede Richtungsöffnung (181-188) reversibel verschließbar ist, um ihre Bewegung zu steuern.

## Revendications

1. Un dispositif apte à donner une analyse de matériaux en vrac et une recherche active et une élimination de défauts d'écoulement de matériaux en vrac, où le dispositif comprend un système autonome (1), qui est configuré pour être librement placé ou verrouillé à l'intérieur d'un silo de matériaux en vrac (2), et des détecteurs de défauts d'écoulement (3) configurés pour être placés sur des parois du silo de matériaux en vrac (2), où le système autonome (1) a une forme d'un cylindre sur une extrémité terminé par un cône et sur l'autre extrémité avec un capuchon avec un espace à l'intérieur, dans lequel un système d'aération (15) avec des éléments de commande (153) et un silo d'air comprimé (152) relié à des générateurs de pression/dépression (16) sont disposés, où des générateurs de pression/dépression (16) sont en outre reliés à des canaux (151) du système d'aération (15), et en outre un système de vibration (11) et des capteurs de charge combinés (13) sont disposés dans le système autonome (1), où le système de vibration (11) et les capteurs de charge combinés (13) sont connectés à un circuit de commande (17) comprenant une alimentation électrique (171) et un dispositif d'enregistrement (172), **caractérisé en ce que** le système autonome (1) est construit sans connexion de câble au silo de matériaux en vrac (2), **en ce qu'**un analyseur de matériaux en vrac (12), des capteurs combinés (14) de température, d'humidité, d'accélération et de position et un capteur de propriétés optiques (9) sont disposés dans le système autonome (1), où le capteur de propriétés optiques (9) avec une source de lumière synchronisée (10) sont disposés à l'intérieur du capuchon du corps du système autonome (1), et **en ce que** le corps du système autonome (1) est pourvu soit d'au moins deux vis sans fin de mouvement (4) sur sa surface, soit en variante d'une ouverture principale (18) entourée par un système d'ouvertures de direction (181-188) qui sont en outre reliées au générateur de pression/dépression (16) de telle sorte que chaque ouverture de direction (181-188) peut être fermée de manière réversible pour commander son mouvement.
